## Europäisches Patentamt

## European Patent Office

## Office européen des brevets

(19)

(11) Veröffentlichungsnummer: **0 093 396**
**B1**

(12) **EUROPÄISCHE PATENTSCHRIFT**

(45) Veröffentlichungstag der Patentschrift:
29.11.89

(51) Int. Cl.⁴: **G 02 B 6/34**

(21) Anmeldenummer: **83104123.1**

(22) Anmeldetag: **27.04.83**

(54) Optischer Wellenlängendemultiplexer nach dem Beugungsgitterprinzip.

(30) Priorität: **03.05.82 DE 3216516**

(43) Veröffentlichungstag der Anmeldung:
**09.11.83 Patentblatt 83/45**

(45) Bekanntmachung des Hinweises auf die Patenterteilung:
**29.11.89 Patentblatt 89/48**

(84) Benannte Vertragsstaaten:
**DE FR GB**

(56) Entgegenhaltungen:
**EP-A- 0 037 787**
**EP-A- 0 067 972**
**US-A- 4 274 706**

**SOVIET JOURNAL OF QUANTUM ELECTRONICS, Band 12, Nr. 2, Februar 1982, Seiten 252-254, American Institute of Physics, New York, US; M.I. BELOVOLOV et al.: "Spectral demultiplexer with a plate waveguide"**
**ELECTRONICS LETTERS, Band 17, Nr. 24, November 1981, Seiten 934-936, London, GB; Y. FUJII et al.: "Cylindrical concave diffraction grating utilising thin silicon chip"**

(73) Patentinhaber: **Siemens Aktiengesellschaft,**
**Wittelsbacherplatz 2, D-8000 München 2 (DE)**

(72) Erfinder: **Mahlein, Hans-F., Dr., Queristrasse 2,**
**D-8025 Unterhaching (DE)**

**Beschreibung**

Die Erfindung betrifft einen optischen Wellenlängendemultiplexer nach dem Beugungsgitterprinzip gemäß dem Oberbegriff des Anspruchs 1.

Ein Demultiplexer der genannten Art ist aus EP-A-37 787 bekannt.

Ein Demultiplexer der genannten Art ist auch aus der EP-A-0 067 972 Artikel 54(3) bekannt, bei dem der zuführende Lichtwellenleiter parallel zu den fortführenden Lichtwellenleitern angeordnet ist.

Aus der Literatur ist bereits eine Reihe von Wellenlängenmultiplex-Komponenten bekannt, die entweder plane Beugungsgitter (in Verbindung mit einem Konkavspiegel oder einer Linse) oder konkave Beugungsgitter benützen. Konkavgitter sind im Gegensatz zu Plangittern kompliziert herzustellen.

Aus Belovolov M. I et al, Third Intern. Conf. Integr. Opt. and Opt. Fiber Coomun., San Francisco, 1981, Paper TUH2 und Laude J.P., Flammand J., Opto, No. 3, (1981) 33 sind kompakte Aufbauten mit Konkavspiegel bekannt, bei denen eine oder mehrere zuführende Glasfaser-Lichtwellenleiter und fortführende Glasfaser-Lichtwellenleiter jeweils eng benachbart sind, wodurch ihre wechselseitige Justierung erschwert wird. Das gleiche gilt für eine Gradientenlinsenanordnung, wie sie aus Kobayashi K., Seki M., Electr. QE-16 (1980) 11 bekannt ist. Bild 6 in dieser Literaturstelle zeigt deutlich den geringen Abstand zwischen zuführender Faser und fortführender Faser, der etwa 50 µm beträgt und erwarten läßt, daß bei einer, beispielsweise zum Justieren notwendigen Translation der fortführenden Fasern, auch die zuführende Faser ungewollt verschoben wird.

Bei dem Aufbau gemäß Opto Nr. 3 (1981) 33 ist ungünstig, daß ein zweigeteiltes Gitter oder ein Gitter mit einer Öffnung im Zentrum verwendet werden muß.

Aus Watanabe R. et al, Electron. Lett. 16 (1980) S. 108 gehen Anordnungen hervor, bei denen die zuführende Faser und die fortführenden Fasern räumlich getrennt sind. Der Aufbau ist jedoch wenig kompakt.

Aufgabe der Erfindung ist es, einen Demultiplexer der eingangs genannten Art derart zu gestalten, daß der zuführende Lichtwellenleiter und die fortführenden Lichtwellenleiter miteinander fluchtend angeordnet werden können.

Diese Aufgabe wird durch die im kennzeichnenden Teil des Patentanspruchs 1 angegebenen Merkmale gelöst.

Bevorzugte und vorteilhafte Ausführungsformen dieses Demultiplexers gehen aus den Ansprüchen 2 bis 5 hervor. Aus einem erfindungsgemäßen Demultiplexer wird ein Multiplexer, wenn man ihn umgekehrt betreibt, d.h. die fortführenden Wellenleiter als zuführende Wellenleiter verwendet. Der Begriff «Demultiplexer» soll demnach auch einen Multiplexer mit umfassen.

Die Figuren 1 bis 8 zeigen Draufsichten auf Ausführungsformen. Die Figuren 1 und 2 zeigen jeweils eine Seitenansicht zweier möglicher Ausführungsvarianten der dargestellten Ausführungsformen.

In den Figuren sind der zuführende Lichtwellenleiter mit 1, der fortführende Wellenleiter mit 2, der transparente, kompakte Körper mit 3, der konkave Spiegel mit 4, das plane, geblazte Gitter mit 5 und Koppelflächen mit 11 bzw. 21 bezeichnet.

In den Figuren 5 bis 7 ist das Gitter 5 nicht in Schrägstellung dargestellt. In einer praktischen Ausführungsform muß es aber schräg gestellt werden, wie etwa in der Ausführungsform nach Figur 8. Diese Schrägstellung ist für geblazte Gitter wichtig.

Sämtliche dargestellten Ausführungsformen können beispielsweise durch Heißpressen von Glas hergestellt werden. Das vorzugsweise geblazte Gitter 5 kann dabei ebenfalls in den Glaskörper 3 gepreßt oder als Replika-Gitter oder Siliziumgitter aufgekittet werden. Für die Faseraufnahme oder -ankopplung können beispielsweise treppenförmige Absätze vorgesehen werden, wie dies beispielsweise im rechten Teil der Figur in der DE-OS 2 828 802 der Fall ist.

Die Lichtwellenleiter 1 und 2 sind in den dargestellten Ausführungsformen Glasfasern.

Sämtliche Ausführungsformen sind Demultiplexer, d.h. das mehrere Wellenlängen enthaltende Licht wird über die Faser 1 zugeführt und die getrennten Wellenlängen von den Fasern fortgeführt.

Durch Strahlumkehr wird aus dem Demultiplexer ein Multiplexer, d.h. die Fasern 2 werden zum Zuführen getrennter Wellenlängen benutzt und die Faser 1 zum Fortführen des vermischten Lichts.

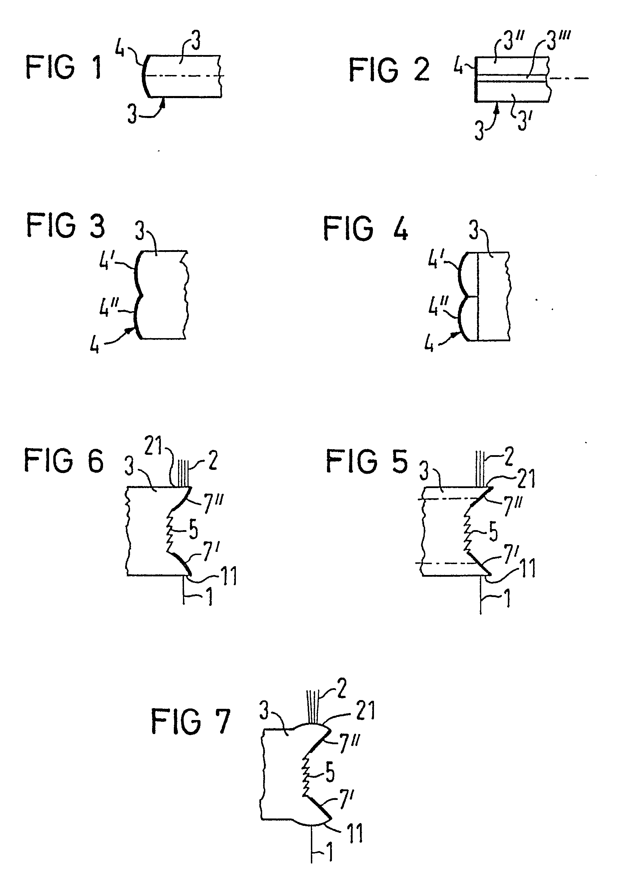

Die Figur 1 zeigt die Seitenansicht einer Ausführungsvariante ohne Wellenleitung, die Figur 2 dagegen die einer Ausführungsvariante mit Wellenleitung. Im letzteren Fall kann statt des zweifach gekrümmten Spiegels 4, der sphärisch oder asphärisch, beispielsweise ellipsoidförmig, torusförmig usw. gekrümmt sein kann, auch ein einfacher zylindrischer Hohlspiegel benutzt werden.

Für die Ausführungsvariante mit Wellenleitung sind zwei Glaskörper 3' und 3'' vorgesehen. In dem Glaskörper 3' oder 3'' wird der Schichtwellenleiter 3''' entweder durch Ionenaustausch erzeugt, oder es wird ein dünnes Glasplättchen mit höherem Brechungsindex zwischen die Glaskörper 3' und 3'' eingefügt.

Gemäß Figur 3 kann der Hohlspiegel 4 aus zwei Hohlspiegeln 4' und 4'' zusammengesetzt sein, die gemäß Figur 4 auch separat hergestellt und mit dem Glaskörper 3 verkittet werden können.

Die rechte Seite des Glaskörpers 3 kann entsprechend den Figuren 5 bis 7 unterschiedlich ausgebildet sein.

Die Koppelflächen 11 und 21 können unterschiedlich oder auch identisch geneigt sein, oder auch gekrümmt sein, was für eine Bildfehlerkorrektur wichtig ist.

Wie in den Figuren 5 bis 8 dargestellt, fluchten die zuführende Faser und die fortführende Faser miteinander, wobei total reflektierende oder verspiegelte Umlenkspiegel 7' oder 7'' verwendet sind, die entweder plan oder zur Bildfehlerkorrektur auch gekrümmt sein können. Zusätzlich können auch hier die Koppelflächen 11 und 21 für die Bildfehlerkorrektur geneigt oder konvex oder konkav gekrümmt werden.

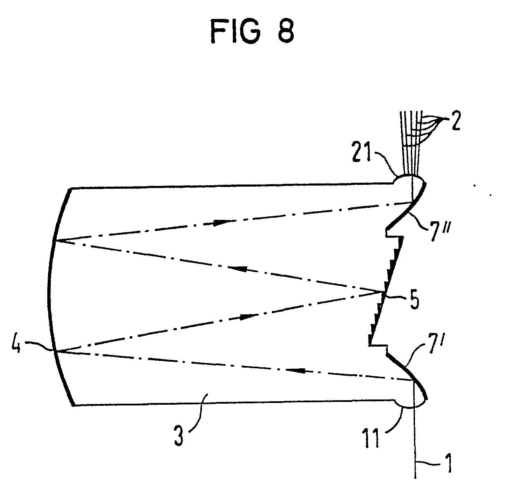

In der Figur 8 ist eine bevorzugte Ausführungsform in Draufsicht dargestellt, bei der die zuführende Faser 1 und die fortführenden Fasern 2 fluchten und sowohl die Umlenkspiegel 7' und 7" als auch die Koppelflächen 11 und 21 konkav bzw. konvex gewölbt sind, wodurch eine sehr gute Bildfehlerkorrektur erzielt wird.

Die Reihe von Möglichkeiten zur Bildfehlerkorrektur eröffnet sich durch die räumliche Trennung des fortführenden Wellenleiters 1 und der fortführenden Wellenleiter 2.

In allen dargestellten Ausführungsformen mit Glaskörper 3 ohne Wellenleitung ist der Glaskörper 3 als einstückiger Körper dargestellt. In der Praxis wird dieser Körper in erster Linie aus mehreren, vorzugsweise miteinander verkitteten Teilkörpern zusammengesetzt sein. Dies deshalb, weil die Technik des Heißpressens von Glas derzeit nicht alle sechs Flächen eines Glaskörpers, sondern nur einige Seitenflächen, insbesondere sich gegenüberliegende Seitenflächen pressen kann. Man wird aus diesem Grunde mehrere heißgepreßte Körper zu einem kompakten Gesamtkörper 3 zusammenfügen. Es sei aber darauf hingewiesen, daß die einstückige Realisierung, wenn sie bei fortschreitender Verbesserung des Heißpreßverfahrens einmal möglich sein sollte, durch die vorliegende Erfindung mit umfaßt ist.

Es sei auch ausdrücklich darauf hingewiesen, daß die in den Figuren 1 und 2 dargestellten Ausführungsvarianten auf ihrer Gitterseite gestaltet sein können, wie eine der Ausführungsformen, die in den Figuren 5 bis 8 dargestellt sind, oder anders ausgedrückt, die Körper 3 der Ausführungsformen nach den Figuren 5 bis 8 können Körper ohne Wellenleitung gemäß Figur 2 oder Körper mit Wellenleitung gemäß Figur 3 sein.

Die Wellenleiter 1 und 2 können auch Streifenwellenleiter sein.

Das vorstehend Dargelegte und den Demultiplexer betreffende gilt in entsprechender Weise für den Multiplexer.

Wesentliche Vorteile der Erfindung liegen noch darin, daß

1. die zuführende(n) Faser(n) und die fortführende(n) Faser(n) räumlich getrennt sind, woraus eine einfache Faserjustierung und die Serie von Möglichkeiten der Bildfehlerkorrektur resultieren, und

2. kompakte Aufbauten trotz der räumlichen Trennung der zuführenden Faser(n) und der fortführenden Faser(n) realisiert werden können.

## Patentansprüche

1. Optischer Wellenlängen-Demultiplexer nach dem Beugungsgitterprinzip, wobei auf einer Stirnfläche eines transparenten Körpers (3) ein Beugungsgitter (5) und auf der gegenüberliegenden Stirnfläche ein gewölbter Reflektor (4) vorgesehen sind, wobei das mit einem zuführenden Lichtwellenleiter (1) zugeführte Licht im transparenten Körper (3) durch den Reflektor (4) auf das Beugungsgitter (5) gerichtet, vom Beugungsgitter (5) gebeugt und vom Reflektor (4) auf fortführende Lichtwellenleiter (2) fokussiert wird, dadurch gekennzeichnet, daß zu beiden Seiten des Beugungsgitters (5) in Dispersionsrichtung desselbem zwei Umlenkspiegel (7, 7") vorgesehen sind, die als total reflektierende oder verspiegelte Flächen des Körpers (3) ausgebildet sind, von denen einer (7) das über eine Kopplungsfläche (11) eingekoppelte Licht zum Reflektor (4) umlenkt, und von denen der andere das vom Reflektor (4) fokussierte Licht auf die fortführenden Lichtwellenleiter zu einer anderen Koppelfläche (21) umlenkt.

2. Demultiplexer nach Anspruch 1, dadurch gekennzeichnet, daß eine Koppelfläche (11, 21) gewölbt ausgebildet ist.

3. Demultiplexer nach einem der vorhergehenden Ansprüche, dadurch gekennzeichnet, daß ein Umlenkspiegel (7', 7") ein planer Spiegel ist.

4. Demultiplexer nach einem der vorhergehenden Ansprüche, dadurch gekennzeichnet, daß ein Umlenkspiegel (7', 7") gewölbt ausgebildet ist.

5. Demultiplexer nach einem der vorhergehenden Ansprüche, dadurch gekennzeichnet, daß der transparente Körper einen Schichtwellenleiter (3''') aufweist.

## Claims

1. Optical wavelength demultiplexer in accordance with the diffraction grating principle, a diffraction grating (5) being provided on one front face of a transparent body (3) and a domed reflector (4) being provided on the opposite front face, the light supplied by means of a feeding optical waveguide (1) being directed in the transparent body (3) onto the diffraction grating (5) by means of the reflector (4), being diffracted by the diffraction grating (5) and being focused by the reflector (4) onto outgoing optical waveguides (2), characterized in that on both sides of the diffraction grating (5), in the direction of dispersion of the latter, two deflection mirrors (7, 7") are provided which are constructed as totally reflecting or mirrored surfaces of the body (3), one of which (7) deflects the light injected via a coupling face (11) towards the reflector (4) and the other one of which deflects the light focused by the reflector (4) on the outgoing optical waveguides towards another coupling face (21).

2. Demultiplexer according to Claim 1, characterized in that a coupling face (11, 21) is of a domed construction.

3. Demultiplexer according to one of the preceding claims, characterized in that a deflection mirror (7', 7") is a plane mirror.

4. Demultiplexer according to one of the preceding claims, characterized in that a deflection mirror (7', 7") is of a domed construction.

5. Demultiplexer according to one of the preceding claims, characterized in that the transparent body exhibits a planar waveguide (3''').

## Revendications

1. Démultiplexeur optique de longueurs d'ondes fonctionnant selon le principe du réseau de diffraction et dans lequel un réseau de diffraction (5) est prévu sur une surface frontale d'un corps transparent (3) et un réflecteur courbe (4) est prévu sur la surface frontale opposée, et dans lequel la lumière envoyée à un guide d'ondes optiques d'arrivée (1) est dirigée, dans le corps transparent (3), par le réflecteur (4) sur le réseau de diffraction (5), est diffractée par ce dernier et est focalisée par le réflecteur (4) sur des guides d'ondes optiques (2) de retransmission, caractérisé par le fait que des deux côtés du réseau de diffraction (5) se trouvent disposés, dans une direction de dispersion de ce réseau, deux miroirs de renvoi (7, 7''), qui sont réalisés sous la forme de surfaces à réflexion totale ou métallisées du corps (3) et dont l'un (7) renvoie la lumière, introduite par une surface de couplage (11) en direction du réflecteur (4) et dont l'autre renvoie la lumière focalisée par le réflecteur (4) sur les guides d'ondes optiques de retransmission, en direction d'une autre surface de couplage (21).

2. Démultiplexeur suivant la revendication 1, caractérisé par le fait qu'une surface de couplage (11, 21) possède une forme courbe.

3. Démultiplexeur suivant l'une des revendications précédentes, caractérisé par le fait qu'un miroir de renvoi (7', 7'') est un miroir plan.

4. Démultiplexeur suivant l'une des revendications précédentes, caractérisé par le fait qu'un miroir de renvoi (7', 7'') possède une forme courbe.

5. Démultiplexeur suivant l'une des revendications précédentes, caractérisé par le fait que le corps transparent possède un guide d'ondes à couches (3''').

FIG 1

FIG 2

FIG 3

FIG 4

FIG 6

FIG 5

FIG 7

# FIG 8